# EUROPÄISCHE PATENTSCHRIFT

(11) **EP 1 277 929 B1**
(45) Veröffentlichungstag und Bekanntmachung des Hinweises auf die Patenterteilung: **22.03.2006**
(21) Anmeldenummer: 02012034.1
(22) Anmeldetag: 31.05.2002
(51) Int. Cl.: F01N 3/22, F01N 3/30, F02D 41/04, F02M 23/00, F01N 3/20

(54) **Verfahren und Vorrichtung zur Abgasnachbehandlung in Verbrennungskraftmaschinen**
Method and device for exhaust gas after treatment in internal combustion engines
Procédé et dispositif de traitement des gaz d'échappement dans des moteurs à combustion interne

(30) Priorität: 19.07.2001 DE 10135303
(43) Veröffentlichungstag der Anmeldung: 22.01.2003
(73) Patentinhaber: ROBERT BOSCH GMBH, 70442 Stuttgart (DE)
(72) Erfinder: Hiller, Burkhard, 71739 Oberriexingen (DE); Glenz, Andreas, 71394 Kernen I.R. (DE)
(74) Vertreter: Hörschler, Wolfram Johannes

(56) Entgegenhaltungen:
- DE-A- 4 434 835
- US-A- 4 257 227
- US-B1- 6 195 985

## Beschreibung

### Technisches Gebiet

Bei modernen Verbrennungskraftmaschinen, die hinsichtlich ihrer Emissionen ständig sich verschärfende Abgasnormen in den USA und Europa erfüllen müssen, werden bei Kraftfahrzeugen mit Otto-Motoren elektrisch betriebene, zuschaltbare Sekundärluftpumpen eingesetzt. Die Sekundärluftpumpe wird zur Abgasnachbehandlung verwendet und kurz nach dem Start der Verbrennungskraftmaschine für einen Zeitraum zwischen 30 und 60 Sekunden aktiviert. Während der Startphase wird durch die Hinzumischung von Luft zum Abgas eine thermische Nachverbrennung herbeigeführt, die dem Ziel dient, den Katalysator im Abgassystem schneller aufzuheizen und dessen Konvertierungsraten zu erhöhen.

### Stand der Technik

Aus US 4,257,227 ist ein Sekundärluftsteuerungsgerät für eine Verbrennungskraftmaschine bekannt. Das Sekundärluftsteuerungsgerät umfasst einen Unterdruckbehälter, in dem ein Unterdruck anliegt, durch welchen beim Abstellen der Verbrennungskraftmaschine in einen Brennraum der Verbrennungskraftmaschine gelangter Kraftstoff nach dem Verdampfen herausgesaugt wird und das im Brennraum der Verbrennungskraftmaschine gebildete Kraftstoffluftgemisch demzufolge abgemagert wird. Über eine Ventilanordnung wird dem Ansaugtrakt der Verbrennungskraftmaschine beim Abziehen des Zündschlüssels Sekundärluft zugeführt, was für eine bestimmte Zeitspanne erfolgt. Dadurch soll ein Entweichen von kraftstoffbeladener Luft in die Umgebung verhindert werden.

US 6,195,985 B1 betrifft ein Verfahren zur Reduktion von Emissionen einer Verbrennungskraftmaschine mit einer Kraftstoffversorgung und einem Abgaskatalysator. Vor dem Abstellen der Verbrennungskraftmaschine wird ein Reinigungsprozess durchlaufen. Dazu wird die Verbrennungskraftmaschine für eine bestimmte Zeitspanne in Bewegung gehalten, bevor diese abgestellt wird. Zumindest zeitweise werden mindestens einige Zylinder der Verbrennungskraftmaschine von der Kraftstoffzufuhr abgeschnitten und diesen ausschließlich Luft zugeführt. In der Verbrennungskraftmaschine abgelagerte Rückstände werden dem Abgaskatalysator zugeführt, der sich noch auf Betriebstemperatur befindet, wobei der Abgaskatalysator mit Sauerstoff angereichert wird.

Aus der Publikation von BOSCH "Otto-Motoren-Management, Grundlagen und Komponenten", Gelbe Reihe, Ausgabe 2001, Technische Unterrichtung Seite 82 ist bekannt, durch thermische Nachverbrennung die im Abgas noch vorhandenen unverbrannten Bestandteile des Luft-Kraftstoffgemisches einer Nachverbrennung zu unterziehen. Bei magerer Gemischzusammensetzung ist der dazu erforderliche Sauerstoff noch als Restsauerstoff im Abgas enthalten, da dieser während der Verbrennung nicht umgesetzt wurde. Bei fettem Gemisch hingegen, wie es bei Verbrennungsmotoren im Kaltstart oft erforderlich ist, kann zusätzlich in den Abgaskanal eingebrachte Luft (Sekundärluft) die Aufheizung des Katalysators beschleunigen. Die sich einstellende exotherme Reaktion reduziert einerseits die unverbrannten Kohlenwasserstoffe und das Kohlenmonoxid, andererseits erwärmt die Nachverbrennung auch den Abgaskatalysator und bringt diesen schneller auf seine, eine optimale Konvertierung ermöglichende Betriebstemperatur. Damit lässt sich die optimale dem Katalysator stehendes, HC-beladenes Restgas handelt. Diese Kohlenwasserstoffmoleküle verharren so lange vor dem Abgastrakt, bis sie beim erneuten Start des Motors in Richtung Katalysator getrieben werden. Beim Kaltstart vergehen einige Hübe der Zylinder, bis der Motor startet, so dass dieses HC-beladene Restabgas in den kalten Katalysator gelangt. Dort wird das HC-beladene Restabgas zwischengelagert und gelangt zum Teil auch direkt in die Umwelt, da der Katalysator noch nicht aktiviert ist.

Bei sich einstellender Temperaturerhöhung im Katalysator auf den Taupunkt gelangt auch das im Katalysator zwischengelagerte, HC-beladene Restabgas unverbrannt in die Umwelt. Das Aktivieren der Sekundärluftpumpe während der Startphase der Verbrennungskraftmaschine hat keinen Einfluss auf die oben geschilderten Vorgänge.

### Darstellung der Erfindung

Bei Betrieb einer Verbrennungskraftmaschine gemäß des erfindungsgemäß vorgeschlagenen Verfahrens lässt sich eine weitere Reduktion unverbrannter Kohlenwasserstoffe im Abgas erzielen, indem die HC-Reste im Abgas im noch heißen Katalysator nach einem Motorlauf durch zugeführte Sekundärluft verbrannt werden. Die Restwärme des Katalysators kann somit zur Nachverbrennung unverbrannter Kohlenwasserstoffe im Abgas ausgenutzt werden.

Es wird ein Luftstrom erzeugt, der die an Saugrohr, Ventiltellern, Zylinderwänden anhaftenden HC-Moleküle vor der Drosselklappe durch den Motor bis an den heißen Katalysator transportiert. Zur Erzeugung dieses Luftstromes kann sowohl die Sekundärluftpumpe als auch ein 2-Wege-Ventil eingesetzt werden. Der Luftstrom wird hinter der Drosselklappe in Richtung Einlassventile in das Saugrohr eingeleitet, wobei die Drosselklappe in ihrer Schließposition steht, um ein Entweichen des erzeugten Sekundärluftstroms in Richtung auf den Luftfilter hin zu vermeiden. An der Verbrennungskraftmaschine stehen im besten Falle alle Ein- und Auslassventile der Zylinder offen. Bei herkömmlichen Ventilsteuerungssystemen an Verbrennungskraftmaschinen lässt sich zumindest an einem der Zylinder eine Offenstellung von Ein-/Auslassventilen erreichen, so dass die Luft in Richtung des Katalysators strömt und sich mit unverbrannten HC's anreichert.

Neben dem Einsatz einer Sekundärluftpumpe an einer Verbrennungskraftmaschine lässt sich ein Luftstrom auch dadurch erzeugen, dass die Verbrennungskraftmaschine durch den Starter/Startergenerator lediglich durchgedreht wird und auf diese Weise ein die Zylinder durchströmender Luftstrom generiert wird. Bei Lastkraftwagen ließe sich ein Luftstrom in Richtung auf den Katalysator durch Anzapfen des Druckluftniveaus des Bremssystems erzeugen.

### Zeichnung

Anhand der Zeichnung wird die Erfindung nachstehend eingehender beschrieben.

### Es zeigt:

- Figur 1: die Anordnung einer Sekundärluftpumpe und andere Komponenten an einer Verbrennungskraftmaschine und
- Figur 2: das Einblasen eines Sekundärluftstroms im Saugtrakt kurz vor den Einlassventilen im Zylinderkopfbereich der Verbrennungskraftmaschine.

### Ausführunizsvarianten

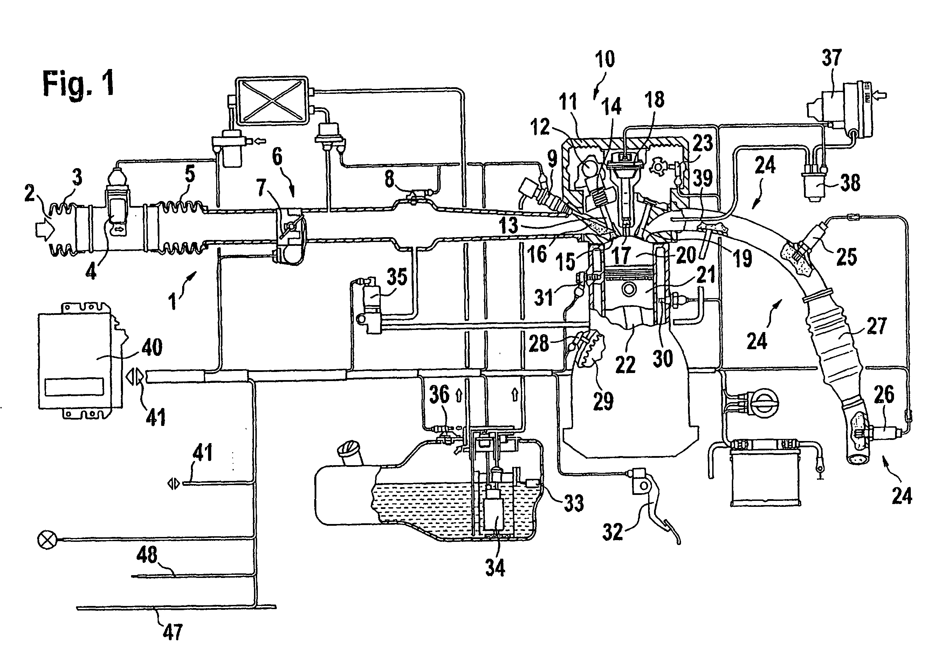

Figur 1 zeigt die Anordnung einer Sekundärluftpumpe und anderer Komponenten an einer Verbrennungskraftmaschine nach dem Stand der Technik.

Der Verbrennungslcraftmaschine ist ein Ansaugtrakt 1 zugeordnet, der eine Ansaugöffnung 2 umfasst, durch welche die zur Verbrennung benötigte Umgebungsluft angesaugt wird. Zwischen zwei im Ansaugtrakt vorgesehenen Manschetten 3 bzw. 5 ist ein Luftmassenmesser 4 aufgenommen. Nach der dem Luftmassenmesser 4 nachgeordneten Manschette 5 ist eine Drosselvorrichtung 6 vorgesehen, welche eine den frei durchströmbaren Querschnitt des Ansaugtraktes 1 freigebende oder versperrende Drosselklappe 7 umfasst. Die Drosselklappe 7 kann beispielsweise elektrisch angesteuert werden und steht über eine Verbindung mit einem mehrdirektionalen Datenbus 41, 47 mit dem der Verbrennungskraftmaschine zugeordneten, hier nicht eingehender beschriebenen Steuergerät 40 in Verbindung. Der Drosselvorrichtung 6 im Ansaugtrakt 1 der Verbrennungskraftmaschine ist ein Saugrohrdrucksensor 8 nachgeordnet. Der Saugrohrdrucksensor 8 ist in einem erweiterten Querschnittsbereich des Ansaugtraktes 1 aufgenommen. In diesen Bereich mündet eine Einspeiseleitung, die hinter einem Abgasrückführventil 35 abzweigt. Das Abgasrückführventil 35 steht ebenfalls mit dem Steuergerät 40 über einen Datenbus in Verbindung.

Die Verbrennungskraftmaschine 10 weist im Bereich ihres Zylinderkopfes 11 eine Ventilsteuerung 12 auf, mit welcher die jeweiligen Brennräume 20 der Verbrennungskraftmaschine 10 zugeordnete Einlassventile bzw. Auslassventile 19 gesteuert werden. Die in Figur 1 dargestellten Einlassventile umfassen einen Ventilstößel 13 sowie einen daran aufgenommenen Ventilteller 15 sowie eine Ventilfeder 14. Im Zylinderkopfbereich 11 zwischen Einlass- und Auslassventilen 19 ist eine Zündspüle 18 angeordnet, die mit einer darunter angeordneten, mit ihrer Zündelektrode in den Brennraum 20 hineinragenden Zündkerze 17 verbunden ist. Unterhalb des Einlassventils, bestehend aus Ventilstößel 13 und Ventilteller 15 ist ein Kraftstoffverteiler bzw. ein Einspritzventil 9 aufgenommen, welches über eine Zuleitung mit einem Kraftstofftankmodul 33 in Verbindung steht. Der aus dem Einspritzventil bzw. dem Kraftstoffverteiler 9 austretende Einspritzkegel ist mit Bezugszeichen 16 gekennzeichnet.

Innerhalb des Brennraumes 20 der Verbrennungskraftmaschine 10 bewegt sich an einem Pleuel 22 aufgenommener Kolben 21 auf und ab, wobei über die Pleuelstange 22 die vertikale Hubbewegung des Kolbens 21 im Brennraum 20 in eine Drehbewegung einer Schwungscheibe 29 umgewandelt wird. Zur Ermittlung der Phasenlage der Schwungscheibe 29 ist diese an ihre Außenumfangsfläche mit einem Zahnmuster versehen, welches durch Drehzahlgeber 28 abgetastet wird. Mittels eines Klopfsensors 31 wird die im Brennraum 20 ablaufende Verbrennung überwacht. Der Klopfsensor 31 steht ebenfalls über den Datenbus mit dem Steuergerät 40 der Verbrennungskraftmaschine in Verbindung.

Dem Brennraum 20 der Verbrennungskraftmaschine 10 ist darüber hinaus ein Temperatursensor 30 zugeordnet, mit welchem die Temperatur des Kühlmediums der Verbrennungskraftmaschine 10 überwacht wird.

Im Zylinderkopfbereich 11 der Verbrennungskraftmaschine 10 ist weiterhin ein Phasengeber 23 aufgenommen, mit welchem die Drehlage der Verbrennungskraftmaschine überwacht wird und welcher ebenfalls mit dem Steuergerät 40 über den Datenbus in Verbindung steht. Entsprechend der detektierten Phasenlase der Verbrennungskraftmaschine 10, erfolgt beim Start derselben über das Steuergerät 40 die Festlegung der Zündfolge sowie die Festlegung der Einspritzabfolgen entsprechend der Zündfolge. Unterhalt des Phasengebers 23 ist das Auslassventil 19 des Brennraumes 20 dargestellt, über welches das im Brennraum 20 verbrannte Abgas in ein Abgasbehandlungssystem 24 strömt. Das Abgasbehandlungssystems 24 umfasst einen Katalysator 27, der der Reinigung der Abgase dient. Vor dem Abgaskatalysator 27 ist im Abgasbehandlungssystem 25 eine erste λ-Sonde 25 aufgenommen; dem Abgaskatalysator 27 im Abgasbehandlungssystem 24 ist des weiteren eine zweite λ-Sonde 26 nachgeordnet. Beide λ-Sonden stehen über Anschlussleitungen ebenfalls mit dem der Verbrennungskraftmaschine zugeordneten Datenbus 41, 47 in Verbindung. Mit beiden λ-Sonden 25 bzw. 26 wird im Abgas noch vorhandene Sauerstoffanteil ermittelt und an das Steuergerät 40 zurückgemeldet, so dass eine entsprechende Gemischaufbereitung im Ansaugtrakt 1 bzw. bei der Einspritzung in den Brennraum 20 erfolgen kann. Vom Abgasbehandlungssystem 24 zweigt eine Rückführleitung für das Abgas zum Abgasrückführventil 35 ab, über welches Abgas in den Ansaugtrakt 1 der Verbrennungskraftmaschine zurückführbar ist.

Der in Figur 1 schematisch wiedergegebenen Verbrennungskraftmaschine ist darüber hinaus eine Luftquelle in Gestalt einer Sekundärluftpumpe 37 zugeordnet. Die Sekundärluftpumpe 37 arbeitet mit einem Sekundärluftventil 38 zusammen, über welches Luft in das Abgasbehandlungssystem 24 geleitet wird. Die Mündungsstelle der Sekundärluftzufuhr ist mit Bezugszeichen 39 gekennzeichnet und befindet sich unmittelbar hinter dem Auslassventil 19 im Zylinderkopfbereich 11 der Verbrennungskraftmaschine 10. Mit dieser aus dem Stand der Technik bekannten Anordnung einer Zusatzluftquelle wurde vor Beginn eines jeweiligen Motorlaufes durch Hinzumischung von Luft eine thermische Nachverbrennung in Gang gesetzt, die dem Ziel diente, den Abgaskatalysator 27 schneller aufzuheizen und damit eine schnellere Betriebsbereitschaft und ausreichende Konvertierungsraten in diesem sicherzustellen.

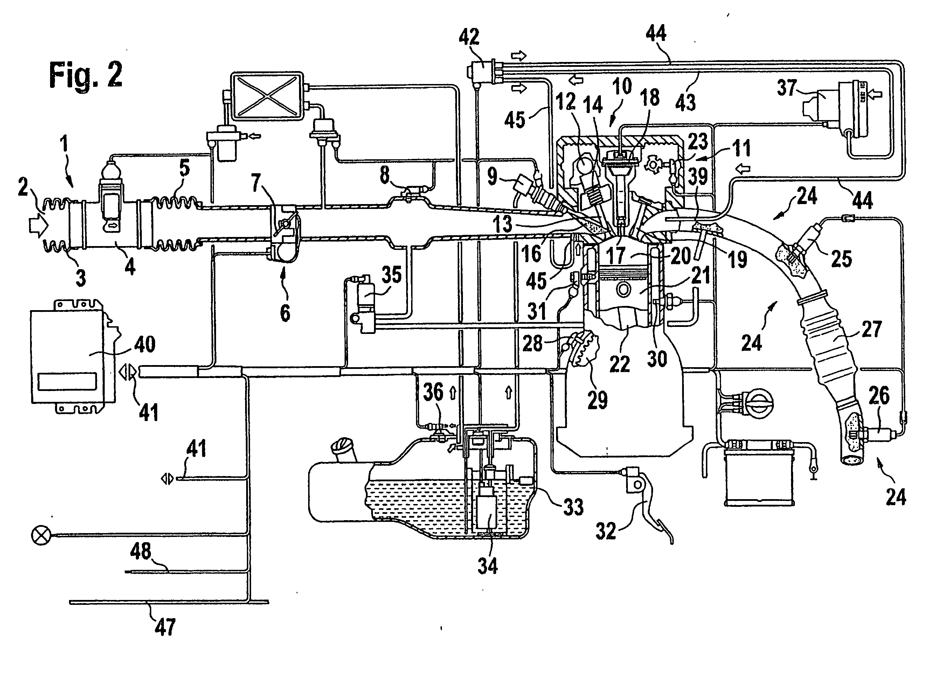

Figur 2 zeigt das Erzeugen eines Sekundärluftstroms im Saugtrakt kurz vor den Einlassventilen im Zylinderkopfbereich der Verbrennungskraftmaschine.

Im Unterschied zur Darstellung gemäß Figur 1 steht die zusätzliche Luftquelle in Gestalt einer Sekundärluftpumpe 37 mit unabhängig von der Verbrennungskraftmaschine 10 angeordnetem elektrischen Antrieb über eine Sekundärluftzuleitung 43 in Verbindung mit einem 2-Wege-Ventil 42. Vom 2-Wege-Ventil 42 zweigt eine erste Sekundärluftzuleitung 44 ab, die im Abgasbehandlungssystem 24 unmittelbar hinter dem Auslassventil 19 des Zylinderkopfbereiches 11 der Verbrennungskraftmaschine 10 mündet. Darüber hinaus zweigt vom 2-Wege-Ventil 42 eine zweite Sekundärluftzuleitung 45 ab, deren Mündung im Ansaugtrakt 1 der Verbrennungskraftmaschine liegt. Im in Figur 2 dargestellten Ausführungsbeispiel liegt die Mündung der zweiten Sekundärluftzuleitung 45 unmittelbar im Bereich des Kraftstoffverteilers bzw. des Einspritzventils 9. Die Sekundärluftpumpe 37 sowie das 2-Wege-Ventil 42 stehen über Leitungsverbindungen mit dem Steuergerät 40 der Verbrennungskraftmaschine 10 in Verbindung. Über einen Datenbus 41, 47 können zwischen den einzelnen Komponenten der Verbrennungskraftmaschine und dem Steuergerät 40 Daten ausgetauscht werden, wobei der Datenfluß bidirektional erfolgt. Das Steuergerät 40 weist unter anderem eine Diagnoseschnittstelle 46 auf sowie eine Verbindung zu einer hier nicht näher dargestellten Wegfahrsperre 48, welcher ein Starten der Verbrennungskraftmaschine 10 für Unbefugte verhindern soll. Der Datenbus 41, 47 kann zum Beispiel als ein CAN ausgebildet sein und sorgt für einen reibungslosen Datenaustausch zwischen den Komponenten der Verbrennungskraftmaschine 10 und dem Steuergerät 40.

Die Verbrennungskraftmaschine 10 entsprechend der Darstellung in Figur 2 kann mit einer nockenwellengeführten Ventilsteuerung 12 ausgestattet sein; eine Ausgestaltungsvariante besteht in einem von der Kurbelwelle unabhängigen Auslegung der Ventilsteuerung 12 für die Ein- bzw. Auslassventile im Zylinderkopfbereich 11 der Verbrennungskraftmaschine 10.

Nach Abstellen der Verbrennungskraftmaschine 10 weist der im Abgasbehandlungssystem 24 aufgenommene Abgaskatalysator 27 im wesentlichen noch seine Betriebstemperatur auf. Durch das Steuergerät 40 erfolgt eine Ansteuerung der im Ansaugtrakt 1 aufgenommenen Drosselvorrichtung 6, so dass die Drosselklappe 7 in ihre Schließstellung verdreht wird und den Ansaugtrakt 1 gegen die Umgebung verschließt. Darüber hinaus nimmt die Verbrennungskraftmaschine 10 nach Abstellen eine Vorzugslage in Bezug auf ihre Phasenlage derart ein, dass bei nockenwellengesteuerter Ventilsteuerung 12 zumindest die Einlassventile 13, 15 und das Auslassventil 19 zumindest eines Brennraumes 20 der Verbrennungskraftmaschine 10 geöffnet sind. Danach erfolgt eine Ansteuerung der zum Beispiel als Sekundärluftpumpe gestalteten zusätzlichen Luftquelle, so dass über den ersten Sekundärlufteintrag 44 sowie den zweiten Sekundärlufteintrag 45 ein Luftstrom erzeugt wird, der je nach Mündung im Ansaugtrakt 1 sich an der Wandung des Saugrohrs angelagerte Kohlenwasserstoffe (HC), durch Ausgasen der Ventilteller 15 auftretende HC-Molekülkonzentrationen sowie nach Abstellen der Verbrennungskraftmaschine 10 vor dem Abgaskatalysator 27 stehendes, HC-beladenes Restabgas mitreißt und vom Ansaugtrakt 1 durch die aufgezählten Komponenten der Verbrennungskraftmaschine 10 in das Abgasbehandlungssystem 24 fördert und in den noch betriebswarmen Abgaskatalysator 27 transportiert. Durch Aktivierung der zusätzlichen Luftquelle 37 für einen Zeitraum von 30 bis 60 Sekunden nach einem vorangegangenen Motorlauf kann dadurch HC-beladenes Restabgas im noch betriebsbereiten Abgaskatalysator 27 verbrannt und damit umgesetzt werden.

Der Luftstrom, welcher an einem zweiten Sekundärlufteintrag 45 dem Ansaugtrakt 1 der Verbrennungskraftmaschine 10 nach dem Motorlauf zugeführt wird, kann auch durch das Anzapfen eines Druckluftreservoirs eines Fahrzeugsbremssystems erfolgen, wie dies zum Beispiel an Lastkraftwagen ab einem bestimmten zulässigen Gesamtgewicht eingesetzt wird. Besonders begünstigt wird das erfindungsgemäß vorgeschlagene Verfahren dadurch, dass möglichst viele Ein- bzw. Auslassventile 19 der Verbrennungskraftmaschine 10 in ihrer Offenstellung stehen, so dass der erzeugte Luftstrom die HC-ausgasenden Komponenten umströmen kann und damit die HC-Moleküle in Richtung des noch betriebswarmen Abgaskatalysators 27 zu fördern vermag.

Bei Verbrennungskraftmaschinen, die eine vom Kurbeltrieb unabhängige Ventilsteuerung 12 aufweisen, kann über eine geeignete Ansteuerung der Ein- bzw. Auslassventile 19 im Zylinderkopfbereich 11 der Verbrennungskraftmaschine 10 auf einfache Weise erreicht werden, dass sämtliche Ein- bzw. Auslassventile der Brennräume 20 der Verbrennungskraftmaschine 10 offenstehen, so dass diese vom erzeugten Luftstrom durchströmt werden können und das HC-beladene Restgas in den Abgaskatalysator 27 fördern. Bei herkömmlichen nockenwellengeführten Ventilsteuerungen 12 lässt sich die Vorzugsstellung, in der zumindest an einem Brennraum 20 das Ein- bzw. Auslassventil 19 geöffnet ist, durch den Phasengeber 23 ermitteln und im Steuergerät 40 abspeichern. Diese bevorzugte Phasenlage nimmt die Verbrennungskraftmaschine nach einem Motorlauf ein, bevor durch das Steuergerät 40 die Zusatzluftquelle 37 - sei es ein Druckluftreservoir eines Fahrzeugbremssystems oder sei es eine elektrisch angetriebene Sekundärluftpumpe - angesteuert wird.

Eine weitere Möglichkeit, nach einem Motorlauf einen die Komponenten der Verbrennungskraftmaschine durchströmenden bzw. umströmenden Luftstrom zu erzeugen, besteht darin, ein Durchdrehen der Verbrennungskraftmaschine über einen Starter/Startergenerator bei blockierter Zündausgabe und gesperrter Kraftstoffzufuhr vorzunehmen. Auf diese Weise wird ein Luftstrom durch Öffnen und Schließen von Einlassventilen 13, 15 bzw. Auslassventilen 19 durch die einzelnen Brennräume 20 der Verbrennungskraftmaschine erzeugt, wodurch HC-beladenes Restabgas dem noch betriebswarmen Abgaskatalysator 27 im Abgasbehandlungssystem 24 zugeführt werden kann. In diesem werden die geförderten HC-Moleküle umgesetzt; ferner wird vor dem Abgaskatalysator ruhendes, HC-beladenes Restabgas im Abgaskatalysator 27 nachverbrannt.

Bei den skizzierten Ausführungsvarianten des der Erfindung zugrundeliegenden Gedankens ist die Position des zweiten Sekundärlufteintrages 45 im Ansaugtrakt 1 frei wählbar. Befindet sich die Mündung des zweiten Sekundärlufteintrags 45 unmittelbar hinter der Drosselvorrichtung 6 im Ansaugtrakt 1, so lässt sich ein größtmögliches Volumen - zum Beispiel der Wandfilm im Saugrohr - aus Ansaugtrakt, Brennraum und den vom Luftstrom umströmten Komponenten in das Abgasbehandlungssystem 24 fördern, so dass eine größtmögliche Umsetzung von HC-Molekülkonzentrationen im noch betriebswarmen Abgaskatalysator 27 nach einem vorangegangenen Motorlauf möglich ist.

### Bezugszeichenliste

- 1: Ansaugtrakt
- 2: Ansaugöffnung
- 3: Manschette
- 4: Luftmassenmesser
- 5: Manschette
- 6: Drosselvorrichtung
- 7: Drosselklappe
- 8: Saugrohrdrucksensor
- 9: Kraftstoffverteiler/Einspritzventil
- 10: Verbrennungskraftmaschine
- 11: Zylinderkopfbereich
- 12: Ventilsteuerung
- 13: Ventilstößel
- 14: Ventilfeder
- 15: Ventilteller
- 16: Einspritzkegel
- 17: Zündkerze
- 18: Zündspule
- 19: Auslassventil
- 20: Brennraum
- 21: Kolben
- 22: Pleuel
- 23: Phasengeber
- 24: Abgasbehandlungssystem
- 25: erste λ-Sonde
- 26: zweite λ-Sonde
- 27: Abgaskatalysator
- 28: Drehzahlgeber
- 29: Schwungscheibe
- 30: Temperatursensor
- 31: Klopfsensor
- 32: Fahrpedal
- 33: Tankeinbaumodul
- 34: elektrische Kraftstoffpumpe
- 35: Abgasrückführventil
- 36: Tankdrucksensor
- 37: Sekundärluftpumpe
- 38: Sekundärluftventil
- 39: Sekundärlufteintrag
- 40: Steuergerät
- 41: Signalfluss
- 42: 2-Wege-Ventil
- 43: Sekundärluftzuleitung
- 44: erster Sekundärlufteintrag
- 45: zweiter Sekundärlufteintrag
- 46: Diagnoseschnittstelle
- 47: CAN-Datenbus
- 48: Wegfahrsperre

## Patentansprüche

1. Verfahren zur Behandlung von Gasen von Verbrennungskraftmaschinen nach einem Motorlauf, wobei die Verbrennungskraftmaschine (10) einen Ansaugtrakt (1) und ein Abgasbehandlungssystem (24) mit einem Abgaskatalysator (27) sowie eine Ventilsteuerung (12) umfasst und dem Abgasbehandlungssystem (24) an einem ersten Sekundärlufteintrag (39) Sekundärluft einer Luftquelle (37) zuführbar ist, mit nachfolgenden Verfahrensschritten:
- nach einem Motorlauf bei noch betriebswarmern Katalysator (27) wird der Ansaugtrakt (1) nach außen verschlossen,
- die Verbrennungskraftmaschine (10) wird nach einem Motorlauf derart in einer Phasenlage abgestellt, dass Ein- *und* Auslassventile (13, 15; 19) mindestens eines Brennraumes (20) offenstehen,
- es wird ein Luftstrom nach einem Motorlauf mittels der Luftquelle (37) erzeugt, der im Ansaugtrakt (1) der Verbrennungskraftmaschine (10) an einer zweiten Eintragstelle (45) zugeleitet wird, und die Komponenten (1, 13, 15, 20, 19 und 24) der Verbrennungskraftmaschine in Richtung auf den betriebswarmen Katalysator (27) durch- bzw. umströmt.

2. Verfahren gemäß Anspruch 1, **dadurch gekennzeichnet, dass** der Luftstrom im Ansaugtrakt (1) zwischen einer Drosselvorrichtung (6) und dem Zylinderkopfbereich (11) der Verbrennungskraftmaschine (10) eingeleitet wird.

3. Verfahren gemäß Anspruch 1, **dadurch gekennzeichnet, dass** bei nockenwellengesteuerter Ventilsteuerung (12) die Verbrennungskraftmaschine (10) nach einem Motorlauf in eine in einem Steuergerät (40) abgespeicherte Vorzugsstellung abgestellt wird, in welche die Ein-/Auslassventile (13, 15; 19) mindestens eines Brennraumes (20) offenstehen.

4. Verfahren gemäß Anspruch 1, **dadurch gekennzeichnet, dass** bei unabhängiger Ventilsteuerung (12) die Ein-/Auslassventile (13, 15; 19) nach einem Motorlauf aller Brennräume (20) der Verbrennungskraftmaschine (10) in ihrer Offenstellung stehen.

5. Verfahren gemäß Anspruch 1, **dadurch gekennzeichnet, dass** als Luftquelle eine Sekundärluftpumpe (37) eingesetzt wird.

6. Verfahren gemäß Anspruch 1, **dadurch gekennzeichnet, dass** als Luftquelle das Druckluftreservoir eines Fahrzeugbremssystems dient.

7. Verfahren gemäß Anspruch 1, **dadurch gekennzeichnet, dass** der Luftstrom durch die mittels eines Starter/Startergenerators durchgedrehte Verbrennungskraftmaschine (10) bei blockierter Zündausgabe und gesperrter Kraftstoffzufuhr erzeugt wird.

8. Vorrichtung zur Behandlung von Gasen von Verbrennungskraftmaschinen nach einen Motorlauf, wobei die Verbrennungskraftmaschine (10) einen Ansaugtrakt (1) und ein Abgasbehandlungssystem (24) mit einem Abgaskatalysator (27) sowie eine Ventilsteuerung (12) umfasst und dem Abgasbehandlungssystem (24) an einem ersten Sekundärlufteintrag (39, 44) Sekundärluft einer Luftquelle (37) zuführbar ist, **dadurch gekennzeichnet, dass** der erste Sekundärlufteintrag (39, 44) in das Abgasbehandlungssystem (24) abzweigt und ein zweiter Sekundärlufteintrag (45) in den Ansaugtrakt (1) mündet, über welchen Sekundärluft in den Ansaugtrakt (1) entlang eines Ventitstößels (13) eines offenstehenden Ventiltellers (15) eines Einlassventils und eines offenstehenden Auslassventils (19) mindestens eines Brennraums (20) in das Abgasbehandlungssystem (24) strömt.

9. Vorrichtung gemäß Anspruch 8, **dadurch gekennzeichnet, dass** die Luftquelle eine Sekundärluftpumpe (37) ist.

10. Vorrichtung gemäß Anspruch 8, **dadurch gekennzeichnet, dass** die Luftquelle (37) das Druckluftreservoir eines Fahrzeugbremssystems ist.

## Claims

1. Method for treating gases from internal combustion engines after the engine has been running, the internal combustion engine (10) comprising an intake section (1) and an exhaust-gas treatment system (24) with an exhaust-gas catalytic converter (27) and a valve control (12), and it being possible for secondary air from an air source (37) to be fed to the exhaust-gas treatment system (24) at a first secondary air introduction point (39), comprising the following method steps:
- after the engine has been running, with the catalytic converter (27) still at its operating temperature, the intake section (1) is closed off with respect to the outside,
- after the engine has been running, the internal combustion engine (10) is set in a phased position such that intake and exhaust valves (13, 15; 19) of at least one combustion chamber (20) are open,
- after the engine has been running, the air source (37) generates an air stream which is fed in within the intake section (1) of the internal combustion engine (10) at a second introduction point (45) and flows through or around the components (1, 13, 15, 20, 19 and 24) of the internal combustion engine in the direction of the catalytic converter (27), which is at its operating temperature.

2. Method according to Claim 1, **characterized in that** the air stream is introduced in the intake section (1) between a throttle apparatus (6) and the cylinder head region (11) of the internal combustion engine (10).

3. Method according to Claim 1, **characterized in that**, with camshaft-controlled valve control (12), the internal combustion engine (10), after the engine has been running, is set in a preferred position which is stored in a control unit (40) and in which the intake/exhaust valves (13, 15; 19) of at least one combustion chamber (20) are open.

4. Method according to Claim 1, **characterized in that**, in the case of independent valve control (12), after the engine has been running the intake/exhaust valves, (13, 15; 19) of all the combustion chambers (20) of the internal combustion engine (10) are in their open position.

5. Method according to Claim 1, **characterized in that** the air source used is a secondary air pump (37).

6. Method according to Claim 1, **characterized in that** the air source used is the compressed-air reservoir of a vehicle brake system.

7. Method according to Claim 1, **characterized in that** the air stream is generated by the internal combustion engine (10), which has been cranked by means of a starter/starter generator, with the ignition output blocked and the fuel supply shut off.

8. Apparatus for treating gases from internal combustion engines after the engine has been running, the internal combustion engine (10) comprising an intake section (1) and an exhaust-gas treatment system (24) with an exhaust-gas catalytic converter (27), as well as a valve control (12) , and it being possible for secondary air from an air source (37) to be fed to the exhaust-gas treatment system (24) at a first secondary air introduction point (39, 44), **characterized in that** the first secondary air introduction point (39, 44) branches off into the exhaust-gas treatment system (24), and a second secondary air introduction point (45) opens out into the intake section (1), via which second secondary air introduction point (45) secondary air flows into the intake section (1) along a valve lifter (13) of an open valve disc (15) of an intake valve and of an open exhaust valve (19) of at least one combustion chamber (20) into the exhaust-gas treatment system (24).

9. Apparatus according to Claim 8, **characterized in that** the air source is a secondary air pump (37).

10. Apparatus according to Claim 8, **characterized in that** the air source (37) is the compressed-air reservoir of a vehicle brake system.

## Revendications

1. Procédé de traitement des gaz dans des moteurs à combustion interne après une marche du moteur, le moteur à combustion interne (10) comprenant une ligne d'admission (1) et un système de traitement des gaz d'échappement (24) doté d'un catalyseur de gaz d'échappement (27) ainsi qu'une commande de soupape (12), de l'air secondaire d'une source d'aération (37) pouvant être amené au système de traitement des gaz d'échappement (24) sur une première entrée d'air secondaire (39),
**caractérisé par**
les étapes suivantes :
- après une marche du moteur pour un catalyseur (27) encore chaud, la ligne d'admission (1) est fermée vers l'extérieur,
- après une marche du moteur à combustion interne (10) il est coupé dans une position de phase de manière à ce qu'une soupape d'admission et une soupape d'échappement (13 ; 15 ; 19) d'au moins une chambre de combustion (20) restent ouvertes, et
- on génère à l'aide de la source d'aération (37) après une marche du moteur, un courant d'air amené au moteur à combustion interne (10) sur un deuxième point d'entrée (45) dans la ligne d'admission (1) et traversant ou contournant les composants (1, 13, 15, 20, 19 et 24) du moteur à combustion interne dans la direction du catalyseur (27) encore chaud

2. Procédé selon la revendication 1,
**caractérisé en ce que**
le courant d'air dans la ligne d'admission (1) est introduit entre un dispositif d'étranglement (6) et la zone de la culasse (11) du moteur à combustion interne (10).

3. Procédé selon la revendication 1,
**caractérisé en ce que**
dans le cas d'une commande de soupape (12) pilotée par arbre à cames, le moteur à combustion interne (10) est coupé après une marche du moteur dans une position préférée enregistrée dans un appareil de commande (40), et dans laquelle la soupape d'admission et la soupape d'échappement (13, 15 ; 19) d'au moins une chambre de combustion (20) restent ouvertes.

4. Procédé selon la revendication 1,
**caractérisé en ce que**
dans le cas d'une commande de soupape (12) indépendante, les soupapes d'admission et les soupapes d'échappement (13, 15 ; 19) de toutes les chambres de combustion (20) du moteur à combustion interne (10),restent dans leur position d'ouverture après une marche du moteur.

5. Procédé selon la revendication 1,
**caractérisé en ce que**
comme source d'aération, on utilise une pompe à air secondaire (37)

6. Procédé selon la revendication 1,
**caractérisé en ce que**
la source d'aération est le réservoir d'air comprimé d'un système de freinage de véhicule.

7. Procédé selon la revendication 1,
**caractérisé en ce que**
le courant d'air est généré par le moteur à combustion interne (10) tourné par un starter/générateur de starter, l'émission d'allumage étant bloquée et l'arrivée de carburant étant fermée.

8. Dispositif pour le traitement des gaz de moteurs à combustion interne après une marche du moteur, le moteur à combustion interne (10) comprenant une ligne d'admission (1) et un système de traitement des gaz d'échappement (24) doté d'un catalyseur de gaz d'échappement (27) ainsi qu'une commande de soupape (12), de l'air secondaire d'une source d'aération (37) pouvant être amené au système de traitement des gaz d'échappement (24) sur une première entrée d'air secondaire (39, 44),
**caractérisé en ce que**
la première entrée d'air secondaire (39, 44) est déviée dans le système de traitement des gaz d'échappement (24) et une deuxième entrée d'air secondaire (45) débouche dans la ligne d'admission (1) par laquelle de l'air secondaire dans la ligne d'admission (1) s'écoule dans le système de traitement des gaz d'échappement (24) le long d'un poussoir de soupape (13) d'une tête de soupape (15) d'une soupape d'admission et d'une soupape d'échappement (19) restées ouvertes d'au moins une chambre de combustion (20).

9. Dispositif selon la revendication 8,
**caractérisé en ce que**
la source d'aération est une pompe à air secondaire (37).

10. Dispositif selon la revendication 8,
**caractérisé en ce que**
la source d'aération (37) est le réservoir d'air comprimé d'un système de freinage de véhicule.
